# EUROPEAN PATENT APPLICATION

(11) **EP 4 668 945 A1**
(43) Date of publication of application: **24.12.2025**
(21) Application number: 23921999.1
(22) Date of filing: 17.02.2023
(51) Int. Cl.: H04W 72/0446

(54) **CHANNEL PREEMPTION METHODS AND APPARATUSES, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); HE, Chuanfeng, Dongguan, Guangdong 523860 (CN); XU, Weijie, Dongguan, Guangdong 523860 (CN)
(74) Representative: Penza, Giancarlo
(86) International application number: PCT/CN2023/076893
(87) International publication number: WO 2024/168857

(57) **Abstract**

Provided in the embodiments of the present application are channel preemption methods and apparatuses, and a communication device. A channel preemption method comprises: a first device receiving a first frame sent by a second device, wherein the first frame carries first information, the first information is used for determining a transmission opportunity (TXOP), and the TXOP is preempted by the second device and used for uplink sending.

## Description

### TECHNICAL FIELD

Embodiments of the present disclosure relate to the technical field of mobile communications, and particularly to a method and apparatus for channel preemption, and a communication device.

### BACKGROUND

The energy required for the operation of an ambient energy-based communication device is mainly sourced from the ambient environment, and such communication device typically has limited capabilities. In an unlicensed spectrum, the communication device needs to perform channel preemption for signal transmission. However, since the ambient energy-based communication device does not have a capability of channel preemption, when such communication device actively transmits signal(s), how to acquire the channel for transmitting the signal(s) is a problem that needs to be solved.

### SUMMARY

Embodiments of the present disclosure provide methods and apparatuses for channel preemption, a communication device, a chip, a computer-readable storage medium, a computer program product, and a computer program.

A method for channel preemption is provided in an embodiment of the present disclosure, and the method the following operation.

A first device receives a first frame from a second device. Here, the first frame carries first information, the first information is used to determine a transmission opportunity (TXOP) preempted by the second device, and the TXOP is used for uplink transmission.

A method for channel preemption is provided in an embodiment of the present disclosure, and the method the following operation.

A second device transmits a first frame to a first device. Here, the first frame carries first information, the first information is used to determine a TXOP preempted by the second device, and the TXOP is used for uplink transmission.

An apparatus for channel preemption is provided in an embodiment of the present disclosure. The apparatus is applied to a first device, and includes a receiving unit.

The receiving unit is configured to receive a first frame from a second device, where the first frame carries first information, the first information is used to determine a TXOP preempted by the second device, and the TXOP is used for uplink transmission.

An apparatus for channel preemption is provided in an embodiment of the present disclosure. The apparatus is applied to a second device, and includes a transmission unit.

The transmission unit is configured to transmit a first frame to a first device, where the first frame carries first information, the first information is used to determine a TXOP preempted by the second device, and the TXOP is used for uplink transmission.

A communication device is provided in an embodiment of the present disclosure, and the communication device includes a processor and a memory. The memory is configured to store a computer program, and the processor is configured to call and run the computer program stored in the memory to perform each of the aforementioned methods for channel preemption.

A chip is provided in an embodiment of the present disclosure, and the chip is configured to perform each of the aforementioned methods for channel preemption.

Specifically, the chip includes a processor, and the processor is configured to call and run a computer program stored in a memory, to cause a device mounted with the chip to perform each of the aforementioned methods for channel preemption.

A computer-readable storage medium is provided in an embodiment of the present disclosure, and the computer-readable storage medium has stored thereon a computer program. The computer program causes a computer to perform each of the aforementioned methods for channel preemption.

A computer program product is provided in an embodiment of the present disclosure, and the computer program product includes computer program instructions. The computer program instructions cause a computer to perform each of the aforementioned methods for channel preemption.

A computer program is provided in an embodiment of the present disclosure. The computer program, when executed by a computer, causes the computer to perform each of the aforementioned methods for channel preemption.

With the technical solutions described above, the first device may determine, based on the first information provided by the second device, the TXOP preempted by the second device. Therefore, the TXOP preempted by the second device can be shared with the first device, so that the first device can be enabled to acquire the TXOP without performing the channel preemption, thereby realizing the signal transmission, and reducing the complexity and cost of the first device.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a diagram of a communication system architecture in which an embodiment of the present disclosure is applied.
FIG. 2 is a diagram of another communication system architecture in which an embodiment of the present disclosure is applied.
FIG. 3 is a schematic flowchart of a method for channel preemption according to an embodiment of the present disclosure.
FIG. 4 is a schematic diagram of a channel preemption mechanism according to an embodiment of the present disclosure.
FIG. 5 is a first flowchart of interaction between a station (STA) and an access point (AP) according to an embodiment of the present disclosure.
FIG. 6 is a first schematic diagram of a relationship between a TXOP and a beacon frame according to an embodiment of the present disclosure.
FIG. 7 is a second schematic diagram of a relationship between a TXOP and a beacon frame according to an embodiment of the present disclosure.
FIG. 8 is a second flowchart of interaction between an STA and an AP according to an embodiment of the present disclosure.
FIG. 9 is a first schematic diagram of structural composition of an apparatus for channel preemption according to an embodiment of the present disclosure.
FIG. 10 is a second schematic diagram of structural composition of an apparatus for channel preemption according to an embodiment of the present disclosure.
FIG. 11 is a schematic structural diagram of a communication device according to an embodiment of the present disclosure.
FIG. 12 is a schematic structural diagram of a chip according to an embodiment of the present disclosure.
FIG. 13 is a schematic block diagram of a communication system according to an embodiment of the present disclosure.

### DETAILED DESCRIPTION

The technical solutions in the embodiments of the present disclosure will be described below in combination with the accompanying drawings in the embodiments of the present disclosure. It is apparent that the described embodiments are partial embodiments of the present disclosure but not all of the embodiments. Based on the embodiments in the present disclosure, all other embodiments acquired by those of ordinary skill in the art without creative work shall fall within the scope of protection of the present disclosure.

The technical solutions in the embodiments of the present disclosure may be applied to various communication systems, such as wireless fidelity (WiFi) systems, 3rd generation partnership project (3GPP) systems, etc.

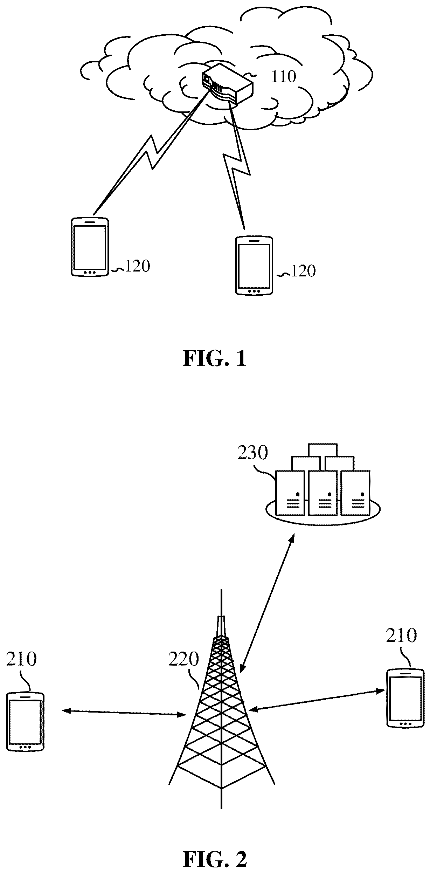

FIG. 1 is an example of a communication system in which an embodiment of the present disclosure is applied.

As illustrated in FIG. 1, the communication system may include an AP 110 and a STA 120 that accesses a network through the AP 110. In some scenarios, the AP 110 may be referred to as an AP STA, i.e., the AP 110 may also an STA in a sense. In some scenarios, the STA 120 may be referred to as a non-AP STA. In some scenarios, the STA 120 may include an AP STA and a non-AP STA. Communication in the communication system may include: communication between the AP 110 and the STA 120, communication between the STA 120 and another STA 120, or communication between the STA 120 and a peer STA. Here, the peer STA may refer to a device that communicates with a peer of the STA 120, for example, the peer STA may be an AP or a non-AP STA.

Herein, the AP 110 may serve as a bridge connecting a wired network and a wireless network, with a primary function of connecting various wireless network clients together, and then accessing the wireless network into the Ethernet. The AP 110 may be a terminal device (such as a mobile phone) or a network device (such as a router) with a WiFi chip.

It should be noted that the role of the STA 120 in the communication system may not be absolute. That is, the role of the STA 120 in the communication system may be switched between the AP and the STA. For example, in some scenarios, when a mobile phone is connected to a router, the mobile phone acts as the STA; and when the mobile phone serves as a hotspot for another mobile phone, the mobile phone acts as the AP.

In some embodiments, the AP 110 and the STA 120 may be devices applied in an internet of vehicles (IoT) node, an IoT sensor and the like in the IoT, a smart camera, a smart remote control, a smart water/electricity meter and the like in smart home, as well as a sensor and the like in smart city.

In some embodiments, the AP 110 may be a device that supports the 802.11be standard. The AP may also be a device that supports various current and future WLAN standards from the 802.11 family, such as 802.11ax, 802.11ac, 802.11n, 802.11g, 802.11b and 802.11a. In some embodiments, the STA 120 may support the 802.11be standard. The STA may also support various current and future WLAN standards from the 802.11 family, such as 802.11ax, 802.11ac, 802.11n, 802.11g, 802.11b and 802.11a.

In some embodiments, the AP 110 and/or the STA 120 may be deployed on land, including indoor or outdoor, handheld, wearable or vehicle-mounted. The AP 110 and/or the STA 120 may also be deployed on the water (such as ships). Moreover, the AP 110 and/or the STA 120 may also be deployed in the air (e.g., on an aircraft, balloon and satellite, etc.).

In some embodiments, the STA 120 may be a device that supports the WLAN/WiFi technology, such as a mobile phone, a Pad, a computer with a wireless transceiver function, a virtual reality (VR) device, or an augmented reality (AR) device, a wireless device or a set-top box in industrial control, a wireless device or a vehicle-mounted communication device in self driving, a wireless device in remote medical, a wireless device in smart grid, a wireless device in transportation safety, a wireless device in smart city, a wireless device in smart home, a vehicle-mounted communication device, a wireless communication chip/an application specific integrated circuit (ASIC)/a system on chip (SoC), and the like.

Exemplarily, the STA 120 may also be a wearable device. The wearable device referred to as a wearable smart device, which is a general term of the wearable devices that are intelligently designed and developed by applying wearable technologies to daily wear, such as glasses, gloves, watches, clothing and shoes. The wearable device is a portable device that is worn directly on the body or integrated into the user's clothes or accessories. The wearable device is not only a hardware device, but also realizes powerful functions through software support, data interaction and cloud interaction. Generalized wearable smart devices have full functions and large size, and may realize complete or partial functions without relying on smart phones, such as smart watches or smart glasses, as well as those that only focus on a certain type of application functions and need to be used in conjunction with other devices (e.g., smart phones), such as various smart bracelets and smart jewelry for physical sign monitoring.

**It** is to be understood that FIG. 1 is only an example of the present disclosure, and should not be construed as any limitation of the present disclosure. For example, FIG. 1 illustrates only one AP and two STAs exemplarily. In some embodiments, the communication system may include multiple APs as well as another number of STAs, which are not limited in the embodiments of the present disclosure.

FIG. 2 is an example of another communication system architecture applied in an embodiment of the present disclosure.

As illustrated in FIG. 2, the communication system may include a terminal device 210 and a network device 220. The network device 220 may communicate with the terminal device 210 through an air interface. Multi-service transmission between the terminal device 210 and the network device 220 is supported.

It should be understood that the technical solutions of the embodiments of the present disclosure may be applied to various communication systems, such as an Internet of things (IoT) system, a narrow band Internet of things (NB-IoT) system, an enhanced machine-type communications (eMTC) system, a 5-th generation (5G) communication system (also referred to as a new radio (NR) communication system), or a future communication system, etc.

In the communication system illustrated in FIG. 2, the network device 220 may be an access network device that communicates with the terminal device 210. The access network device may provide communication coverage for a specific geographic region and may communicate with a terminal device 210 (e.g., a User Equipment (UE)) in the coverage.

The network device 220 may be a next generation radio access network (NG RAN) device, a base station (gNB) in an NR system, or a wireless controller in a cloud radio access network (CRAN). The network device 220 may further be a relay station, an access point, a vehicle-mounted device, a wearable device, a hub, a switch, a network bridge, a router, a network device in a future evolved public land mobile network (PLMN) or the like.

The terminal device 210 may be any terminal device, which includes, but not limited to, a terminal device that has a wired or wireless connection to the network device 220 or other terminal devices.

As an example, the terminal device 210 may be an access terminal, a UE, a user unit, a user station, a mobile station, a mobile platform, a remote station, a remote terminal, a mobile device, a user terminal, a terminal, a wireless communication device, a user agent, or user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with a wireless communication function, a computing device, another processing device connected to a wireless modem, a vehicle-mounted device, a wearable device, a terminal device in a 5G network, a terminal device in a future evolved network or the like.

The terminal device 210 may be applied to device to device (D2D) communication.

The wireless communication system may further include a core network device 230 that communicates with the base station. The core network device 230 may be a 5G core (5GC) device, such as an access and mobility management function (AMF), an authentication server function (AUSF), a user plane function (UPF), or a session management function (SMF). Optionally, the core network device 230 may also be an evolved packet core (EPC) device in an LTE network, for example, a session management function + core packet gateway (SMF+PGW-C) device. It should be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

One base station, one core network device and two terminal devices are exemplarily shown in FIG. 2. Optionally, the wireless communication system may include multiple base stations, and another number of terminal devices may be included in the coverage of each base station, which is not limited in the embodiments of the present disclosure.

It should be noted that FIGS. 1 and 2 only illustrate the system to which the present disclosure is applicable by way of example. Of course, the methods illustrated in the embodiments of the present disclosure may also be applicable to other systems. Moreover, the terms "system" and "network" the present disclosure are usually interchangeably used herein. The term "and/or" herein only is used to indicate an association relationship for describing the associated objects, and represents that three kinds of relationships may exist. For example, "A and/or B" may represent three conditions, i.e., independent existence of A, existence of both A and B, and independent existence of B. In addition, the character "/" herein usually represents that the previous and next associated objects form an "or" relationship. It should also be understood that the term "indicate" referred to in the embodiments of the present disclosure may be a direct indication or an indirect indication, and may also be indicative of an associated relationship. For example, "A indicates B", which may mean that A directly indicates B, e.g., B may be acquired through A. It may further mean that A indirectly indicates B, e.g., A indicates C, and B may be acquired through C. It may further mean that there is an association between A and B. It should also be understood that the term "corresponding" referred to in the embodiments of the present disclosure may represent that there is a direct correspondence or an indirect correspondence between the two objects, or may further represent that there is an association relationship between the two objects, a relationship between the indication and the object to be indicated, or a relationship between the configuration and the object to be configured, etc. It should also be understood that the phrase "predefined" or "predefined rules" referred to in the embodiments of the present disclosure may be implemented by pre-storing corresponding codes, tables, or by other means that may be used to indicate relevant information in devices (such as terminal devices and network devices). The specific implementations of which are not limited in the present disclosure. For example, the "predefined" may refer to what is defined in a protocol. It should also be understood that the "protocol" in the embodiments of the present disclosure may be a standard protocol in the communication field, such as an LTE protocol, an NR protocol, and related protocols applied in future communication systems, which is not limited in the present disclosure.

In order to facilitate understanding of the technical solutions in the embodiments of the present disclosure, related technologies of the embodiments of the present disclosure are elaborated below. The following related technologies used as optional solutions may be combined with technical solution of the embodiments of the present disclosure in various ways, all of which belong to the scope of protection of the embodiments of the present disclosure.

Power harvesting and back scattering communication technologies are utilized in zero-power communication. A zero-power communication system includes a network device and a zero-power terminal. Herein, the network device is configured to transmit a power supply signal and a downlink communication signal to the zero-power terminal, and further receive a back scattering signal from the zero-power terminal. By way of example, the zero-power terminal includes a power harvesting module, a back scattering communication module and a low-power computing module. In addition, the zero-power terminal may also include a memory and/or a sensor. The memory is configured to store some basic information (e.g., an item identification), and the sensor is configured to acquire sensing data, such as ambient temperature and ambient humidity.

Based on energy sources and usage modes of the zero-power terminals, the zero-power terminals may be classified into the following types.

### (1) Passive zero-power terminal

Such type of zero-power terminal does not require a built-in battery. When the zero-power terminal approaches the network device, the zero-power terminal is in a near-field range formed by antenna radiation of the network device. Therefore, an induced current is generated by the antenna of the zero-power terminal through the electromagnetic induction, and the induced current drives the low-power computing module (i.e., a low-power chip circuit) of the zero-power terminal to operate, thereby realizing demodulation of a forward link signal and modulation of a backward link signal, etc. For the back scattering link, the implementation of back scattering is used by the zero-power terminal for the signal transmission.

Accordingly, whether for the forward link or the reverse link, no built-in battery is needed to drive the passive zero-power terminal, making the passive zero-power terminal to be a true zero-power terminal.

Since the passive zero-power terminal does not require the battery, a radio-frequency circuit and a baseband circuit of the passive zero-power terminal are very simple. For example, a low noise amplifier (LNA), a power amplifier (PA), a crystal oscillator, an analog-to-digital converter (ADC) and the like are not required, so that the passive zero-power terminal has many advantages, such as a small size, a light weight, a low price and a long service life.

### (2) Semi-passive zero-power terminal

The semi-passive zero-power terminal is not equipped with a conventional battery, but it may use a power harvesting module to harvest the radio wave energy and further store the harvested energy in an energy storage unit (such as a capacitor). After acquiring the energy, the energy storage unit may drive the low-power computing module (i.e., the low-power chip circuit) of the zero-power terminal to operate, thereby realizing the demodulation of the forward link signal and the modulation of the backward link signal, etc. For the back scattering link, the implementation of back scattering is utilized by the zero-power terminal for the signal transmission.

Accordingly, whether for the forward link or the reverse link, no built-in battery is needed to drive the semi-passive zero-power terminal. Although the energy stored in the capacitor is used during the operation of the semi-passive zero-power terminal, the energy is sourced from the energy of the radio waves harvested by the power harvesting module, making the semi-passive zero-power terminal to be a true zero-power terminal.

The semi-passive zero-power terminal inherits many advantages of the passive zero-power terminal, so that the semi-passive zero-power terminal has many advantages, such as a small size, a light weight, a low price and a long service life.

### (3) Active zero-power terminal

In some scenarios, the zero-power terminal that is used may also be the active zero-power terminal, which may include a built-in battery. The battery is used to drive the low-power computing module (i.e., the low-power chip circuit) of the zero-power terminal to operate, thereby realizing the demodulation of the forward link signal and the modulation of the backward link signal, etc. However, for the back scattering link, the implementation of back scattering is utilized by the zero-power terminal for the signal transmission. Therefore, the zero-power consumption of such type of terminal is mainly reflected in the fact that the signal transmission of the reverse link does not require the power of the terminal but uses the back scattering manner.

The active zero-power terminal supplies the power to the radio-frequency chip through the built-in battery, thereby increasing a communication range and improving communication reliability. As such, the active zero-power terminal may be applied in some scenarios that require a relatively high requirement in terms of the communication range and communication delay.

With the increasing number of industry applications, the types and application scenarios of connected objects are also growing, which raises higher demands for the price and power consumption of communication devices. It is a key technology of the cellular IoT to implement applications of battery-free and low-cost passive IoT devices, these devices enrich the types and quantities of the terminals connected to the network, thereby truly realizing the Internet of everything. Herein, the IoT device may be implemented based on the zero-power communication technology, such as a radio frequency identification (RFID) technology, and may also be extended on such basis, to be suitable for the cellular IoT.

The energy of a passive IoT device may be sourced from the ambient environment, and such device may be referred to as an ambient IoT (AMP IoT) device. The energy required for the operation of such device is sourced from ambient energy harvesting, and the source of the ambient energy may be a wireless signal, solar energy, thermal energy, etc. The passive zero-power terminal or semi-passive zero-power terminal in the zero-power communication may be a typical passive IoT device.

In the unlicensed spectrum, the communication device needs to perform channel preemption for signal transmission. However, since the AMP IoT device does not have a capability of channel preemption, when such communication device actively transmits signal(s), how to acquire the channel for transmitting the signal(s) is a problem that needs to be solved. Therefore, the following technical solutions in the embodiments of the present disclosure are provided.

For convenience of understanding the technical solutions of the embodiments of the present disclosure, the technical solutions in the present disclosure are described below through the detailed embodiments. The above related technologies, used as optional solutions, may be combined with the technical solutions of the embodiments of the present disclosure in various ways, and the combinations shall fall within the scope of the protection of the embodiments of the present disclosure. The embodiments of the present disclosure include at least part of the following contents.

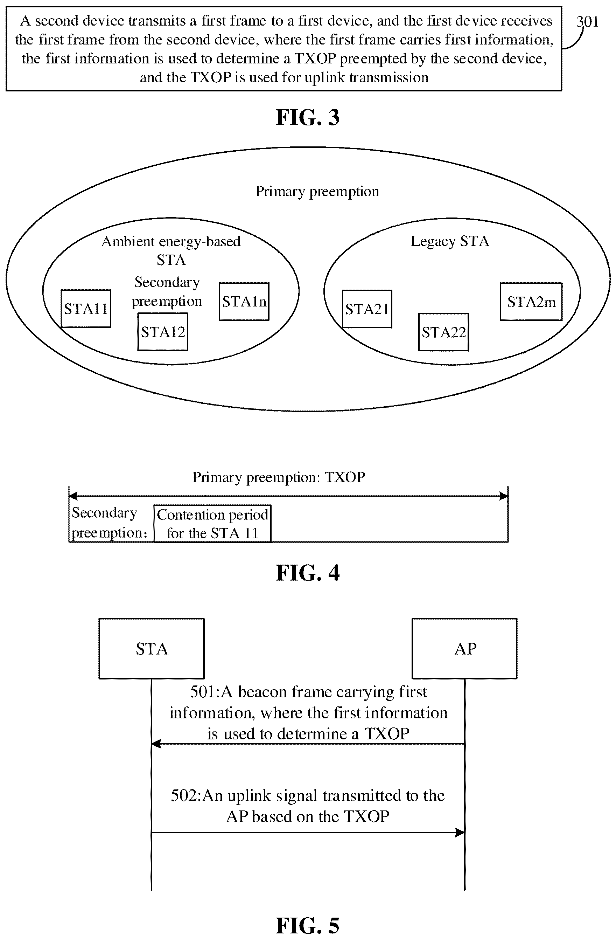

FIG. 3 is a schematic flowchart of a method for channel preemption according to an embodiment of the present disclosure. As illustrated in FIG. 3, the method for channel preemption includes the following operation 301.

At operation 301, a second device transmits a first frame to a first device, and the first device receives the first frame from the second device. The first frame carries first information, the first information is used to determine a TXOP preempted by the second device, and the TXOP is used for uplink transmission.

In some implementations, the first device may be an STA and the second device may be an AP. The communication system architecture including the first device and the second device may be illustrated with reference to FIG. 1.

In some implementations, the first device may be a terminal device, and the second device may be a network device. The communication system architecture including the first device and the second device may be illustrated with reference to FIG. 2.

In the embodiments of the present disclosure, the first device and the second device may operate in an unlicensed spectrum, such as a WiFi spectrum, an unlicensed spectrum in 3GPP, and the like. In the unlicensed spectrum, the communication device (e.g., the first device or the second device) may need to perform the channel preemption to acquire a TXOP before the signal transmission, and the channel may be occupied in the TXOP for the signal transmission.

In an embodiment of the present disclosure, the first device may be an ambient energy-based communication device, such as an AMP IoT device, and the type of ambient energy may be a wireless signal, solar energy, thermal energy, etc. The first device may not have the capability of channel preemption. In order to achieve the uplink transmission, the second device needs to preempt the channel to acquire the TXOP, and further share the TXOP with the first device, thereby enabling the first device to perform the uplink transmission by using the TXOP. It can be understood that the TXOP preempted by the second device may also be referred to as a shared TXOP.

In the embodiments of the present disclosure, the second device may share the TXOP with the first device in the following manners. The second device may transmit the first frame to the first device, and the first device receives the first frame from the second device. Here, the first frame carries the first information, and the first information is used to determine the TXOP preempted by the second device.

In some implementations, the first information may include at least one of: first indication information, second indication information, third indication information, fourth indication information, fifth indication information, sixth indication information, or seventh indication information.

The first indication information may be used to indicate that the TXOP exists in a current first frame.

The second indication information may be used to indicate an offset of a first frame in which the TXOP exists relative to a current first frame.

The third indication information may be used to indicate a period corresponding to a first frame in which the TXOP exists.

The fourth indication information may be used to indicate an initial value of a count parameter. A first frame at which the count parameter reaches a target value may be a first frame in which the TXOP exists. Herein, the first device may decrease or increase the value of the count parameter by a specified step size each time the first frame is received by the first device.

The fifth indication information may be used to indicate a time range of the TXOP.

The sixth indication information may be used to indicate a channel in which the TXOP is located.

The seventh indication information may be used to indicate a maximum time duration for the uplink transmission performed by the first device in the TXOP.

As an example, the first indication information may be 1-bit indication information, a value of 1 (or 0) of the 1-bit indication information may represent that the TXOP exists in the current first frame, while a value of 0 (or 1) of the 1-bit indication information may represent that the TXOP does not exist in the current first frame.

As an example, the second indication information may be a parameter k, which represents that the offset of the first frame in which the TXOP exists relative to the current first frame is k first frames. For example, k = 3 represents that the third first frame after the current first frame is the first frame in which the TXOP exists.

As an example, the third indication information may be a parameter T, which represents the period corresponding to the first frame in which the TXOP exists. For example, T = 4 represents that one out of every four first frames is the first frame in which the TXOP exists.

As an example, the fourth indication information may be a Count parameter. The initial value of the Count is N, the first device may decrease the value of the Count by 1 each time the first frame is received by the first device, and when the Count = 0, the corresponding first frame may be indicated to be the first frame in which the TXOP exists. Alternatively, the initial value of the Count is 0, the first device may increase the value of the Count by 1 each time the first frame is received by the first device, and when the Count = N, the corresponding first frame may be indicated to be the first frame in which the TXOP exists.

As an example, the fifth indication information may include at least one of: an offset of a starting time moment of the TXOP relative to a reception time moment of the first frame; an offset of an ending time moment of the TXOP relative to a reception time moment of the first frame; or a time duration of the TXOP.

As an example, the sixth indication information may be a channel index, which is used to indicate a channel in which the TXOP is located.

As an example, the seventh indication information may be Tm, which represents a maximum time duration for the uplink transmission performed by the first device in the TXOP. The maximum time duration may also be understood as a time delay threshold at which the first device needs to complete the uplink transmission, i.e., the maximum time taken to complete the uplink transmission from the reception of the first frame.

In an embodiment of the present disclosure, the first frame may be a broadcast frame. Some schemes are given below to illustrate the specific implementations of the first frame.

### Scheme 1

In some implementations, the first frame may be a null data packet (NDP) frame or a beacon frame.

Herein, the beacon frame may be a broadcast frame periodically transmitted by the second device, which is used to announce the existence of the network corresponding to the second device. The beacon frame may contain some basic information of the second device, such as a name, an address, a capability and the like of the second device.

Herein, the NDP frame may be a frame with only a physical layer preamble and a physical layer header transmitted by the second device. As an implementation, the NDP frame may be transmitted periodically.

In some implementations, the first device may receive the first frame from the second device based on first configuration information. Herein, the first configuration information may include at least one of:
a period of the first frame,
a starting offset of the first frame, or
at least part of the first information.

Herein, the period of the first frame may represent a time interval between two adjacent first frames.

Herein, the starting offset of the first frame may be used to indicate a starting position of the first frame.

The first device may determine, based on the first configuration information, a transmission position of the first frame; on such basis, the first device may further receive the first frame at the corresponding position, thereby improving the reception efficiency of the first frame.

In some implementations, the first configuration information may be agreed upon in a protocol.

### Scheme 2

In some implementations, the first frame may be an NDP frame.

Herein, the NDP frame may be a frame with only a physical layer preamble and a physical layer header transmitted by the second device. As an implementation, the NDP frame may be transmitted periodically.

In some implementations, the first device may receive the first frame from the second device based on first configuration information. Herein, the first configuration information may include at least one of:
a period of the first frame,
a starting offset of the first frame, or
at least part of the first information.

Herein, the period of the first frame may represent a time interval between two adjacent first frames.

Herein, the starting offset of the first frame may be used to indicate a starting position of the first frame.

The first device may determine, based on the first configuration information, a transmission position of the first frame; on such basis, the first device may further receive the first frame at the corresponding position, thereby improving the reception efficiency of the first frame.

The first configuration information may be acquired in the following two manners.

In some implementations, the first configuration information may be configured by the second device. That is, the second device needs to transmit the first configuration information to the first device. Specifically, the second device may transmit a second frame to the first device, and the first device may receive the second frame from the second device. The second frame carries the first configuration information.

In some implementations, the second frame may be a beacon frame.

In an embodiment of the present disclosure, after acquiring the TXOP through the above schemes, the first device may transmit, based on the TXOP, an uplink signal to the second device.

In some implementations, the first device may preempt a first time region in the TXOP. The first time region is used for the uplink transmission performed by the first device. The first device may transmit, based on the first time region, the uplink signal to the second device.

Herein, the TXOP preempted by the second device may be a common TXOP, and the common TXOP may be directed to a specific type of communication devices, such as ambient energy-based communication device(s). The first device may be of the specific type of the communication devices, such as the ambient energy-based communication device. Considering that the TXOP is not dedicated to the first device, but is used for the specific type of the communication devices, the first device needs to perform secondary preemption of the channel within the range of the specific type of the communication devices, to acquire the time region (referred to as the first time region) that may be dedicated to the first device.

As illustrated in FIG. 4, taking the first device to be the STA and the second device to be the AP as an example, the AP may perform the primary preemption of the channel within the range of the legacy STA(s) and the ambient energy-based STA(s) to acquire a TXOP that is directed to all of the ambient energy-based STAs. The STA 11 belongs to the ambient energy-based STAs, and the STA 11 may perform the secondary preemption of the channel within the range of the ambient energy-based STA(s) to acquire a time region, which may be referred to as a contention period. The STA 11 may perform the uplink transmission within the contention period.

It should be noted that, in the embodiments of the present disclosure, the existence of the TXOP in the first frame may mean that the first frame has an associated TXOP. This is reflected in the fact that the second device preempts a TXOP when or before transmitting the first frame, and the TXOP is the TXOP associated with the first frame. Of course, the second device does not preempt a TXOP each time the first frame is transmitted by the second device, which causes that there are some first frames, each of which has an associated TXOP, while some other first frames, none of which has an associated TXOP.

The technical solutions in the embodiments of the present disclosure are hereinafter exemplified in combination with specific application examples. The following application examples do not limit the scope of the technical solutions in the embodiments of the present disclosure.

### Application Example 1

This application example is illustrated with a WiFi system as an example. Herein, the STA is an AMP IoT device, which does not have the capability of channel preemption, and needs to perform the uplink transmission through the channel preempted by the AP.

FIG. 5 is a flowchart of interaction between an STA and an AP. As illustrated in FIG. 5, the interaction may include the following operations 501 and 502.

At operation 501, the STA receives a beacon frame from the AP, where the beacon frame carries first information, and the first information is used to determine a TXOP.

At operation 502, the STA transmits an uplink signal to the AP based on the TXOP.

In the above operation 501, the AP may periodically transmit the beacon frame in a broadcast manner. That is, the beacon frame may be a broadcast frame. The beacon frame carries the first information, and the first information is used to determine the TXOP that is preempted by the AP. The STA may identify the AP based on the beacon frame, and may also acquire the TXOP that is preempted by the AP.

In the above operation 502, the uplink signal may be an authentication request and/or an association request. The uplink signal may be actively transmitted by the STA, and the STA may transmit the signal through the TXOP that is preempted by the AP.

In some implementations, the first information may include at least one of: first indication information, second indication information, third indication information, fourth indication information, fifth indication information, sixth indication information, or seventh indication information.

The first indication information may be used to indicate that the TXOP exists in a current beacon frame.

The second indication information may be used to indicate an offset of a beacon frame in which the TXOP exists relative to a current beacon frame.

The third indication information may be used to indicate a period corresponding to a beacon frame in which the TXOP exists.

The fourth indication information may be used to indicate an initial value of a count parameter. A beacon frame at which the count parameter reaches a target value may be a beacon frame in which the TXOP exists. Herein, the first device may decrease or increase the value of the count parameter by a specified step size each time the beacon frame is received by the first device.

The fifth indication information may be used to indicate a time range of the TXOP.

The sixth indication information may be used to indicate a channel in which the TXOP is located.

The seventh indication information may be used to indicate a maximum time duration for the uplink transmission performed by the first device in the TXOP.

As an example, the first indication information may be 1-bit indication information, a value of 1 (or 0) of the 1-bit indication information may represent that the TXOP exists in the current beacon frame, while a value of 0 (or 1) of the 1-bit indication information may represent that the TXOP does not exist in the current beacon frame.

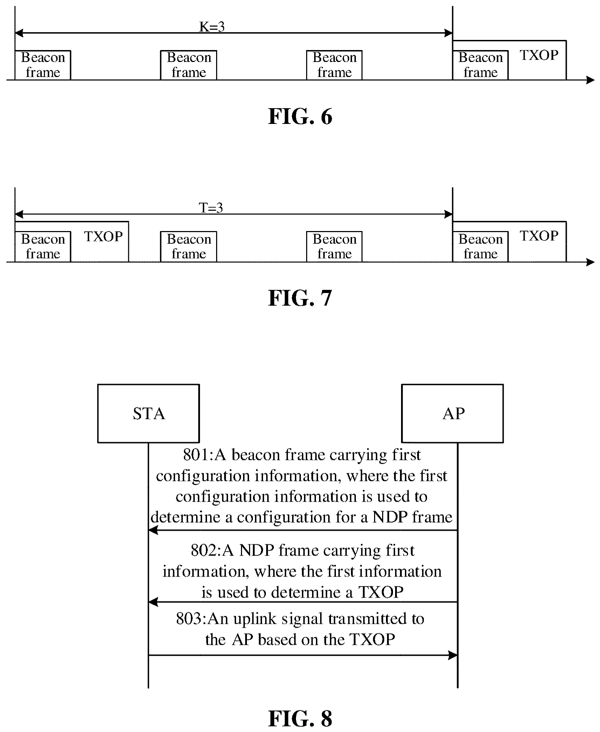

As an example, the second indication information may be a parameter k, which represents that the offset of the beacon frame in which the TXOP exists relative to the current beacon frame is k beacon frames. As illustrated in FIG. 6, k = 3 represents that the third beacon frame after the current beacon frame is the beacon frame in which the TXOP exists.

As an example, the third indication information may be a parameter T, which represents the period corresponding to the beacon frame in which the TXOP exists. As illustrated in FIG. 7, T = 3 represents that one out of every three beacon frames is the beacon frame in which the TXOP exists.

As an example, the fourth indication information may be a Count parameter. The initial value of the Count is N, the first device may decrease the value of the Count by 1 each time the beacon frame is received by the first device, and when the Count = 0, the corresponding beacon frame may be indicated to be the beacon frame in which the TXOP exists. Alternatively, the initial value of the Count is 0, the first device may increase the value of the Count by 1 each time the beacon frame is received by the first device, and when the Count = N, the corresponding beacon frame may be indicated to be the beacon frame in which the TXOP exists.

As an example, the fifth indication information may include at least one of: an offset of a starting time moment of the TXOP relative to a reception time moment of the beacon frame; an offset of an ending time moment of the TXOP relative to a reception time moment of the beacon frame; or a time duration of the TXOP.

As an example, the sixth indication information may be a channel index, which is used to indicate a channel in which the TXOP is located.

As an example, the seventh indication information may be Tm, which represents a maximum time duration for the uplink transmission performed by the first device in the TXOP. The maximum time duration may also be understood as a time delay threshold at which the first device needs to complete the uplink transmission, i.e., the maximum time taken to complete the uplink transmission from the reception of the beacon frame.

The TXOP acquired in the above manner may be used for the uplink transmission (e.g., an initial access) performed by the ambient energy-based STA in the TXOP. The TXOP may be common to the ambient energy-based STAs, and may not be a TXOP dedicated to a specific STA. Therefore, in the TXOP, the STA may contend to initiate the initial access based on a simplified access procedure. Such simplified access procedure does not need to be compatible with the legacy STAs, because the legacy STAs have been excluded from the process of the AP preempting the channel, that is, the legacy STAs are prohibited from performing the initial access in the TXOP. The ambient energy-based STA may perform the secondary preemption in the TXOP, where the secondary preemption may be implemented based on the simplified access procedure that is simplified and designed by taking into account the capability of the ambient energy-based STA.

### Application Example 2

This application example is illustrated with a WiFi system as an example. Herein, the STA is an AMP IoT device, which does not have the capability of channel preemption, and needs to perform the uplink transmission through the channel preempted by the AP.

FIG. 8 is a flowchart of interaction between an STA and an AP. As illustrated in FIG. 8, the interaction may include the following operations 801, 802 and 803.

At operation 801, the STA receives a beacon frame from the AP, where the beacon frame carries first configuration information, and the first configuration information is used to determine a configuration for a NDP frame.

At operation 802, the STA receives the NDP frame based on the first configuration information, where the NDP frame carries first information, and the first information is used to determine a TXOP.

At operation 803, the STA transmits, based on the TXOP, an uplink signal to the AP.

In the above operation 801, the AP may periodically transmit the beacon frame in a broadcast manner. That is, the beacon frame may be a broadcast frame. The beacon frame carries the first configuration information, and the first configuration information is used to determine the configuration for the NDP frame.

In the above operation 802, the AP may periodically transmit a newly defined NDP frame in a broadcast manner, and the newly defined NDP frame may be a broadcast frame. The NDP frame carries the first information, and the first information is used to determine a TXOP that is preempted by the AP.

In the above operation 803, the uplink signal may be, but is not limited to, actively transmitted by the STA, and the STA may transmit the signal through the TXOP that is preempted by the AP.

In some implementations, the first configuration information may include at least one of:
a period of the NDP frame,
a starting offset of the NDP frame, or
relevant information (i.e., at least part of the first information) of the TXOP associated with the NDP frame.

In some implementations, the first information may include at least one of: first indication information, second indication information, third indication information, fourth indication information, fifth indication information, sixth indication information, or seventh indication information.

The first indication information may be used to indicate that the TXOP exists in a current NDP frame.

The second indication information may be used to indicate an offset of a NDP frame in which the TXOP exists relative to a current NDP frame.

The third indication information may be used to indicate a period corresponding to a NDP frame in which the TXOP exists.

The fourth indication information may be used to indicate an initial value of a count parameter. A NDP frame at which the count parameter reaches a target value may be a NDP frame in which the TXOP exists. Herein, the first device may decrease or increase the value of the count parameter by a specified step size each time the NDP frame is received by the first device.

The fifth indication information may be used to indicate a time range of the TXOP.

The sixth indication information may be used to indicate a channel in which the TXOP is located.

The seventh indication information may be used to indicate a maximum time duration for the uplink transmission performed by the first device in the TXOP.

The TXOP acquired in the above manner may be used for the uplink transmission (e.g., an initial access) performed by the ambient energy-based STA in the TXOP. The TXOP may be common to the ambient energy-based STAs, and may not be a TXOP dedicated to a specific STA. Therefore, in the TXOP, the STA may contend to initiate the initial access based on a simplified access procedure. Such simplified access procedure does not need to be compatible with the legacy STAs, because the legacy STAs have been excluded from the process of the AP preempting the channel, that is, the legacy STAs are prohibited from performing the initial access in the TXOP. The ambient energy-based STA may perform the secondary preemption in the TXOP, where the secondary preemption may be implemented based on the simplified access procedure that is simplified and designed by taking into account the capability of the ambient energy-based STA.

The technical solutions in the embodiments of the present disclosure have proposed the methods for the ambient energy-based communication device to acquire the shared TXOP; as such, the ambient energy-based communication device may be enabled to perform the uplink transmission without performing the channel preemption. Therefore, the complexity and cost of the ambient energy-based communication device can be reduced.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solutions of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions acquired after the combination shall also fall within the scope of protection of the present disclosure.

It should be understood that, in various method embodiments of the present disclosure, the size of the sequence number of the aforementioned processes does not imply the sequence of execution. The sequence of execution of the processes shall be determined by functions and inherent logic thereof, and shall not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the term "downlink" is used to represent that the transmission direction of the signal or data is a first direction transmitted from a station to a user device in a cell; the term "uplink" is used to represent that the transmission direction of the signal or data is a second direction transmitted from the user device in the cell to the station; and the term "sidelink" is used to represent that the transmission direction of the signal or data is a third direction transmitted from a user device 1 to a user device 2. For example, a "downlink signal" means that the signal is transmitted in the first direction. In addition, in the embodiments of the present disclosure, the term "and/or" herein is only used to indicate an association relationship for describing associated objects, and represents that three kinds of relationships may exist. Specifically, "A and/or B" may represent three conditions, i.e., independent existence of A, existence of both A and B, and independent existence of B. Additionally, the character "/" in the present disclosure usually represents that previous and next associated objects form an "or" relationship.

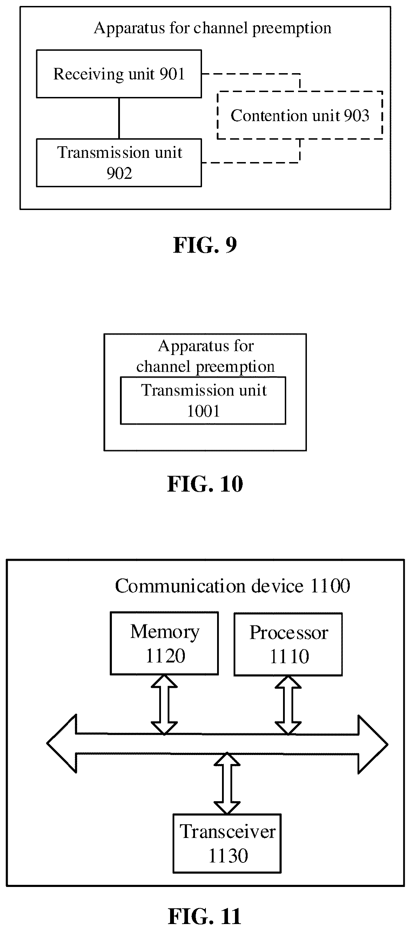

FIG. 9 is a first schematic diagram of structural composition of an apparatus for channel preemption according to an embodiment of the present disclosure, and the apparatus for channel preemption is applied to a first device. As illustrated in FIG. 9, the apparatus for channel preemption includes a receiving unit 901.

The receiving unit 901 is configured to receive a first frame from a second device. Herein, the first frame carries first information, the first information is used to determine a TXOP preempted by the second device, and the TXOP is used for uplink transmission.

In some implementations, the receiving unit 901 may be configured to receive the first frame from the second device based on first configuration information. Herein, the first configuration information may include at least one of:
a period of the first frame;
a starting offset of the first frame; or
at least part of the first information.

In some implementations, the first configuration information may be agreed upon in a protocol.

In some implementations, the first configuration information may be configured by the second device.

In some implementations, the receiving unit 901 may be further configured to receive a second frame from the second device, where the second frame carries the first configuration information.

In some implementations, the second frame may be a beacon frame.

In some implementations, the first frame may be an NDP frame.

In some implementations, the first frame may be a beacon frame.

In some implementations, the first information may include at least one of: first indication information, second indication information, third indication information, fourth indication information, fifth indication information, sixth indication information, or seventh indication information.

The first indication information may be used to indicate that the TXOP exists in a current first frame.

The second indication information may be used to indicate an offset of a first frame in which the TXOP exists relative to a current first frame.

The third indication information may be used to indicate a period corresponding to a first frame in which the TXOP exists.

The fourth indication information may be used to indicate an initial value of a count parameter. A first frame at which the count parameter reaches a target value may be a first frame in which the TXOP exists. Herein, the first device may decrease or increase the value of the count parameter by a specified step size each time the first frame is received by the first device.

The fifth indication information may be used to indicate a time range of the TXOP.

The sixth indication information may be used to indicate a channel in which the TXOP is located.

The seventh indication information may be used to indicate a maximum time duration for the uplink transmission performed by the first device in the TXOP.

In some implementations, the fifth information may include at least one of:
an offset of a starting time moment of the TXOP relative to a reception time moment of the first frame;
an offset of an ending time moment of the TXOP relative to a reception time moment of the first frame; or
a time duration of the TXOP.

In some implementations, the apparatus may further include a transmission unit 902. The transmission unit 902 may be configured to transmit, based on the TXOP, an uplink signal to the second device.

In some implementations, the apparatus may further include a contention unit 903. The contention unit 903 may be configured to preempt a first time region in the TXOP. The first time region is used for the uplink transmission performed by the first device.

In some implementations, the transmission unit 902 may be configured to transmit, based on the first time region, the uplink signal to the second device.

In some implementations, the first device may be an STA and the second device may be an AP; and/or, the first device may be a terminal device and the second device may be a network device.

It is to be understood by those skilled in the art that the related description of the aforementioned apparatus for channel preemption in the embodiments of the present disclosure may be understood with reference to the related description of the method for channel preemption in the embodiments of the present disclosure.

FIG. 10 is a second schematic diagram of structural composition of an apparatus for channel preemption according to an embodiment of the present disclosure, and the apparatus for channel preemption is applied to a second device. As illustrated in FIG. 10, the apparatus for channel preemption includes a transmission unit 1001.

The transmission unit 1001 is configured to transmit a first frame to a first device. Herein, the first frame carries first information, the first information is used to determine a TXOP preempted by the second device, and the TXOP is used for uplink transmission.

In some implementations, the transmission unit 1001 may be further configured to transmit first configuration information to the first device. Herein, the first configuration information may include at least one of:
a period of the first frame;
a starting offset of the first frame; or
at least part of the first information.

In some implementations, the transmission unit 1001 may be further configured to transmit a second frame to the first device, where the second frame carries the first configuration information.

In some implementations, the second frame may be a beacon frame.

In some implementations, the first frame may be an NDP frame.

In some implementations, the first frame may be a beacon frame.

In some implementations, the first information may include at least one of: first indication information, second indication information, third indication information, fourth indication information, fifth indication information, sixth indication information, or seventh indication information.

The first indication information may be used to indicate that the TXOP exists in a current first frame.

The second indication information may be used to indicate an offset of a first frame in which the TXOP exists relative to a current first frame.

The third indication information may be used to indicate a period corresponding to a first frame in which the TXOP exists.

The fourth indication information may be used to indicate an initial value of a count parameter. A first frame at which the count parameter reaches a target value may be a first frame in which the TXOP exists. Herein, the first device may decrease or increase the value of the count parameter by a specified step size each time the first frame is received by the first device.

The fifth indication information may be used to indicate a time range of the TXOP.

The sixth indication information may be used to indicate a channel in which the TXOP is located.

The seventh indication information may be used to indicate a maximum time duration for the uplink transmission performed by the first device in the TXOP.

In some implementations, the fifth information may include at least one of:
an offset of a starting time moment of the TXOP relative to a reception time moment of the first frame;
an offset of an ending time moment of the TXOP relative to a reception time moment of the first frame; or
a time duration of the TXOP.

In some implementations, the first device may be an STA and the second device may be an AP; and/or, the first device may be a terminal device and the second device may be a network device.

It is to be understood by those skilled in the art that the relevant description of the aforementioned apparatus for channel preemption in the embodiments of the present disclosure may be understood with reference to the relevant description of the method for channel preemption in the embodiments of the present disclosure.

FIG. 11 is a schematic structural diagram of a communication device 1100 according to an embodiment of the present disclosure. The communication device may be a first device or a second device. The communication device 1100 illustrated in FIG. 11 includes a processor 1110. The processor 1110 may be configured to call and run a computer program stored in a memory to perform each of the methods according to the embodiments of the present disclosure.

Optionally, as illustrated in FIG. 11, the communication device 1100 may further include a memory 1120. Herein, the processor 1110 may be configured to call and run the computer program stored in the memory 1120 to perform each of the methods according to the embodiments of the present disclosure.

Herein, the memory 1120 may be a separate device independent of the processor 1110, or may be integrated into the processor 1110.

Optionally, as illustrated in FIG. 11, the communication device 1100 may further include a transceiver 1130. The processor 1110 may control the transceiver 1130 to communicate with other devices. Specifically, the transceiver 1130 may transmit information or data to other devices, or receive information or data from other devices.

Herein, the transceiver 1130 may include a transmitter and a receiver. The transceiver 1130 may further include one or more antennas.

Optionally, the communication device 1100 may specifically be the first device in the embodiments of the present disclosure. The communication device 1100 may implement the corresponding processes that are implemented by the first device in each of the methods in the embodiments of the present disclosure. For brevity, details are not elaborated herein again.

Optionally, the communication device 1100 may specifically be the second device in the embodiments of the present disclosure. The communication device 1100 may implement the corresponding processes that are implemented by the second device in each of the methods in the embodiments of the present disclosure. For brevity, details are not elaborated herein again.

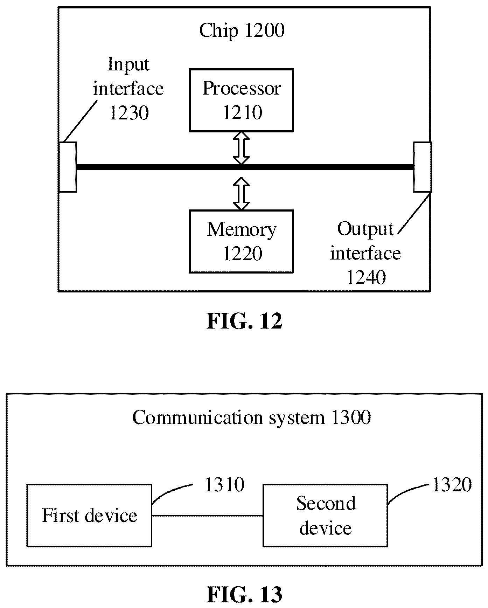

FIG. 12 is a schematic structural diagram of a chip according to an embodiment of the present disclosure. The chip 1200 illustrated in FIG. 12 includes a processor 1210. The processor 1210 may be configured to call and run a computer program stored in a memory to perform each of the methods according to the embodiments of the present disclosure.

Optionally, as illustrated in FIG. 12, the chip 1200 may further include a memory 1220. Herein, the processor 1210 may be configured to call and run the computer program stored in the memory 1220 to perform each of the methods according to the embodiments of the present disclosure.

Herein, the memory 1220 may be a separate device independent of the processor 1210, or may be integrated into the processor 1210.

Optionally, the chip 1200 may further include an input interface 1230. Herein, the processor 1210 may control the input interface 1230 to communicate with other devices or chips. Specifically, the input interface 1230 may acquire information or data from other devices or chips.

Optionally, the chip 1200 may further include an output interface 1240. Herein, the processor 1210 may control the output interface 1240 to communicate with other devices or chips. Specifically, the output interface 1240 may output information or data to other devices or chips.

Optionally, the chip may be applied to the first device in the embodiments of the present disclosure. The chip may implement the corresponding processes implemented by the first device in each of the methods in the embodiments of the present disclosure. For brevity, details are not elaborated herein again.

Optionally, the chip may be applied to the second device in embodiments of the present disclosure. The chip may implement the corresponding processes implemented by the second device in each of the methods in the embodiments of the present disclosure. For brevity, details are not described herein again.

**It** should be understood that, the chip referred to in the embodiments of the present disclosure may also be referred to as a system-level chip, a system chip, a chip system, or a system-on-chip, etc.

FIG. 13 is a schematic block diagram of a communication system 1300 according to an embodiment of the present disclosure. As illustrated in FIG. 13, the communication system 1300 includes a first device 1310 and a second device 1320.

Herein, the first device 1310 may be configured to implement the corresponding functions implemented by the first device in the foregoing methods. The second device 1320 may be configured to implement the corresponding functions implemented by the second device in the foregoing methods. For brevity, details are not elaborated herein again.

**It** should be understood that the processor in the embodiments of the present disclosure may be an integrated circuit chip having a signal processing capability. During an implementation process, various operations in the aforementioned method embodiments may be implemented by using an integrated logic circuit in a hardware form in the processor or implemented by using instructions in a software form. The foregoing processor may be a general-purpose processor, a digital signal processor (DSP), an application-specific integrated circuit (ASIC), a field programmable gate array (FPGA), or another programmable logical device, discrete gate or transistor logical device, or discrete hardware component. Various methods, operations and logical block diagrams disclosed in the embodiments of the present disclosure may be implemented or executed. The general-purpose processor may be a microprocessor, or the processor may be any conventional processor or the like. Operations in combination with the methods disclosed in the embodiments of the present disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), an electrically-erasable programmable memory, a register a register, or the like. The storage medium is located in the memory, and the processor reads information in the memory to complete the operations of the foregoing methods in combination with hardware of the processor.

It can be understood that the memory in the embodiments of the present disclosure may be a volatile memory or a non-volatile memory, or may include both the volatile memory and the non-volatile memory. The non-volatile memory may be an ROM, a PROM, an erasable PROM (EPROM), an electrically EPROM (EEPROM) or a flash memory. The volatile memory may be an RAM and is used as an external high-speed cache. It is exemplarily but unlimitedly described that RAMs in various forms may be adopted, such as a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and methods described herein is intended to include, but not be limited to, memories of these and any other suitable types.

It should be understood that the aforementioned memory is described only exemplarily rather than limitedly. For example, the memory in the embodiments of the present disclosure may be an SRAM, a DRAM, an SDRAM, a DDR SDRAM, an ESDRAM, an SLDRAM, a DR RAM, or the like. That is, the memory in the embodiments of the present disclosure is intended to include, but not be limited to, memories of these and any other suitable types.

An embodiment of the present disclosure further provides a computer-readable storage medium configured to store a computer program.

Optionally, the computer-readable storage medium may be applied to the first device in the embodiments of the present disclosure, and the computer program causes a computer to perform the corresponding processes performed by the first device in each of the methods in the embodiments of the present disclosure. For brevity, details are not elaborated herein again.

Optionally, the computer-readable storage medium may be applied to the second device in the embodiments of the present disclosure, and the computer program causes a computer to perform the corresponding processes performed by the second device in each of the methods in the embodiments of the present disclosure. For brevity, details are not described herein again.

An embodiment of the present disclosure further provides a computer program product, which includes computer program instructions.

Optionally, the computer program product may be applied to the first device in the embodiments of the present disclosure, and the computer program instructions cause a computer to perform the corresponding processes performed by the first device in each of the methods in the embodiments of the present disclosure. For brevity, details are not elaborated herein again.

Optionally, the computer program product may be applied to the second device in the embodiments of the present disclosure, and the computer program instructions cause a computer to perform the corresponding processes performed by the second device in each of the methods in the embodiments of the present disclosure. For brevity, details are not described herein again.

An embodiment of the present disclosure further provides a computer program.

Optionally, the computer program may be applied to the first device in the embodiments of the present disclosure, and the computer program, when is executed by a computer, causes the computer to perform the corresponding processes performed by the first device in each of the methods in the embodiments of the present disclosure. For brevity, details are not elaborated herein again.

Optionally, the computer program may be applied to the second device in the embodiments of the present disclosure, and the computer program, when is executed by a computer, causes the computer to perform the corresponding processes performed by the second device in each of the methods in the embodiments of the present disclosure. For brevity, details are not described herein again.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the systems, apparatuses and units described above, reference may be made to the corresponding processes in the aforementioned method embodiments, and such specific working processes of the systems, devices and units are not described herein again for the purpose of convenient and brief description.

In some embodiments provided in the present disclosure, it should be understood that the disclosed systems, apparatuses and methods may be implemented in other manners. For example, the apparatus embodiments described above are merely exemplary. For example, the division of the units is merely a kind of logical function division, and other division manners may be adopted during practical implementation. For example, multiple units or components may be combined or integrated into another system, or some features may be neglected or not performed. In addition, mutual coupling or direct coupling or communication connection between various displayed or discussed components may be indirect coupling or communication connection, implemented through some interfaces, of the apparatuses or units, and may be implemented in electrical, mechanical or other forms.

The units described as separate components may be or may not be physically separate, and the components displayed as units may be or may not be physical units, that is, may be located in one place, or may be distributed on multiple network units. Some or all of the units may be selected to achieve the objectives of the solutions of the embodiments according to practical requirements.

In addition, various functional units in various embodiments of the present disclosure may be integrated into one processing unit, or each of the functional units may exist physically and separately, or two or more functional units may be integrated into one unit.

When the above functions are implemented in the form of a software functional module and sold or used as an independent product, the functions may be stored in a computer-readable storage medium. Based on such understanding, the essential part of the technical solutions of the present disclosure or a part of the technical solutions that contributes to the related art or a part of the technical solutions can be embodied in a form of a software product. The computer software product is stored in a storage medium, and includes several instructions to enable a computer device (which may be a personal computer, a server, or a network device, etc.) to perform all or a part of the operations of the methods described in the embodiments of the present disclosure. The foregoing storage medium includes various media that can store program codes, such as a USB flash disk, a mobile hard disk, an ROM, an RAM, a magnetic disk, or an optical disk, etc.

The foregoing are merely specific implementations of the present disclosure, but the scope of protection of the present disclosure is not limited thereto. Variations or replacements which can be readily thought by those skilled in the art within the technical scope disclosed in the present disclosure shall fall within the scope of protection of the present disclosure. Therefore, the scope of protection of the present disclosure shall be subject to the scope of protection of the claims.

## Claims

1. A method for channel preemption, comprising:
receiving, by a first device, a first frame from a second device, wherein the first frame carries first information, the first information is used to determine a transmission opportunity (TXOP) preempted by the second device, and the TXOP is used for uplink transmission.

2. The method of claim 1, wherein receiving, by the first device, the first frame from the second device comprises:
receiving, by the first device, the first frame from the second device based on first configuration information, wherein the first configuration information comprises at least one of:
a period of the first frame;
a starting offset of the first frame; or
at least part of the first information.

3. The method of claim 2, wherein the first configuration information is agreed upon in a protocol.

4. The method of claim 2, wherein the first configuration information is configured by the second device.

5. The method of claim 4, further comprising:
receiving, by the first device, a second frame from the second device, wherein the second frame carries the first configuration information.

6. The method of claim 5, wherein the second frame is a beacon frame.

7. The method of any one of claims 1 to 6, wherein the first frame is a null data packet (NDP) frame.

8. The method of any one of claims 1 to 3, wherein the first frame is a beacon frame.

9. The method of any one of claims 1 to 8, wherein the first information comprises at least one of:
first indication information, used to indicate that the TXOP exists in a current first frame;
second indication information, used to indicate an offset of a first frame in which the TXOP exists relative to a current first frame;
third indication information, used to indicate a period corresponding to a first frame in which the TXOP exists;
fourth indication information, used to indicate an initial value of a count parameter, wherein a first frame at which the count parameter reaches a target value is a first frame in which the TXOP exists, and the first device decreases or increases a value of the count parameter by a specified step size each time the first frame is received by the first device;
fifth indication information, used to indicate a time range of the TXOP;
sixth indication information, used to indicate a channel in which the TXOP is located; or
seventh indication information, used to indicate a maximum time duration for the uplink transmission performed by the first device in the TXOP.

10. The method of claim 9, wherein the fifth indication information comprises at least one of:
an offset of a starting time moment of the TXOP relative to a reception time moment of the first frame;
an offset of an ending time moment of the TXOP relative to a reception time moment of the first frame; or
a time duration of the TXOP.

11. The method of any one of claims 1 to 10, further comprising:
transmitting, by the first device, an uplink signal to the second device based on the TXOP.

12. The method of any one of claims 1 to 10, further comprising:
preempting, by the first device, a first time region in the TXOP, wherein the first time region is used for the uplink transmission performed by the first device.

13. The method of claim 12, further comprising:
transmitting, by the first device, an uplink signal to the second device based on the first time region.

14. The method of any one of claims 1 to 13, wherein
the first device is a station (STA), and the second device is an access point (AP); and/or
the first device is a terminal device, and the second device is a network device.

15. A method for channel preemption, comprising:
transmitting, by a second device, a first frame to a first device, wherein the first frame carries first information, the first information is used to determine a transmission opportunity (TXOP) preempted by the second device, and the TXOP is used for uplink transmission.

16. The method of claim 15, further comprising:
transmitting, by the second device, first configuration information to the first device, wherein the first configuration information comprises at least one of:
a period of the first frame;
a starting offset of the first frame; or
at least part of the first information.

17. The method of claim 16, wherein transmitting, by the second device, the first configuration information to the first device comprises:
transmitting, by the second device, a second frame to the first device, wherein the second frame carries the first configuration information.

18. The method of claim 17, wherein the second frame is a beacon frame.

19. The method of any one of claims 15 to 18, wherein the first frame is a null data packet (NDP) frame.

20. The method of claim 15, wherein the first frame is a beacon frame.

21. The method of any one of claims 15 to 20, wherein the first information comprises at least one of:
first indication information, used to indicate that the TXOP exists in a current first frame;
second indication information, used to indicate an offset of a first frame in which the TXOP exists relative to a current first frame;
third indication information, used to indicate a period corresponding to a first frame in which the TXOP exists;
fourth indication information, used to indicate an initial value of a count parameter, wherein a first frame at which the count parameter reaches a target value is a first frame in which the TXOP exists, and the first device decreases or increases a value of the count parameter by a specified step size each time the first frame is received by the first device;
fifth indication information, used to indicate a time range of the TXOP;
sixth indication information, used to indicate a channel in which the TXOP is located; or
seventh indication information, used to indicate a maximum time duration for the uplink transmission performed by the first device in the TXOP.

22. The method of claim 21, wherein the fifth indication information comprises at least one of:
an offset of a starting time moment of the TXOP relative to a reception time moment of the first frame;
an offset of an ending time moment of the TXOP relative to a reception time moment of the first frame; or
a time duration of the TXOP.

23. The method of any one of claims 15 to 22, wherein
the first device is a station (STA), and the second device is an access point (AP); and/or
the first device is a terminal device, and the second device is a network device.

24. An apparatus for channel preemption, applied to a first device, the apparatus comprising:
a receiving unit, configured to receive a first frame from a second device, wherein the first frame carries first information, the first information is used to determine a transmission opportunity (TXOP) preempted by the second device, and the TXOP is used for uplink transmission.

25. An apparatus for channel preemption, applied to a second device, the apparatus comprising:
a transmission unit, configured to transmit a first frame to a first device, wherein the first frame carries first information, the first information is used to determine a transmission opportunity (TXOP) preempted by the second device, and the TXOP is used for uplink transmission.

26. A communication device, comprising: a processor, and a memory for storing a computer program, wherein the processor is configured to call and run the computer program stored in the memory to cause the terminal device to perform the method of any one of claims 1 to 14 or the method of any one of claims 15 to 23.

27. A chip, comprising a processor configured to call and run a computer program from a memory, to cause a device on which the chip is mounted to perform the method of any one of claims 1 to 14 or the method of any one of claims 15 to 23.

28. A computer-readable storage medium for storing a computer program that causes the computer to perform the method of any one of claims 1 to 14 or the method of any one of claims 15 to 23.

29. A computer program product comprising computer program instructions that cause a computer to perform the method of any one of claims 1 to 14 or the method of any one of claims 15 to 23.

30. A computer program that causes a computer to perform the method of any one of claims 1 to 14 or the method of any one of claims 15 to 23.
